# EUROPEAN PATENT SPECIFICATION

(11) **EP 2 793 573 B1**
(45) Date of publication and mention of the grant of the patent: **20.07.2016**
(21) Application number: 12818886.9
(22) Date of filing: 17.12.2012
(51) Int. Cl.: A01N 25/10, A01N 25/24, A01N 39/04

(54) **CATIONIC POLYMERS COMPRISING A HYDROPHOBIC GROUP AS DEPOSITION ENHANCERS FOR PESTICIDES AND CROP PRODUCTION CHEMICALS**
KATIONISCHE POLYMERE MIT EINER HYDROPHOBEN GRUPPE ALS ABLAGERUNGSVERSTÄRKER FÜR PESTIZIDE UND AGRARCHEMIKALIEN
POLYMÈRES CATIONIQUES COMPRENANT UN GROUPE HYDROPHOBE EN TANT QU'ACTIVATEURS DU DÉPÔT POUR DES PESTICIDES ET DES PRODUITS CHIMIQUES DE PRODUCTION DE CULTURES

(30) Priority: 20.12.2011 EP 11194594; 20.12.2011 US 201161577748 P
(43) Date of publication of application: 29.10.2014
(73) Proprietor: Akzo Nobel Chemicals International B.V., 6824 BM Arnhem (NL)
(72) Inventor: WESTBYE, Peter, S-444 45 Stenungsund (SE)
(74) Representative: Akzo Nobel IP Department
(86) International application number: PCT/EP2012/075683
(87) International publication number: WO 2013/092443

(56) References cited:
- EP-A1- 0 825 200
- EP-A2- 0 365 279
- WO-A1-03/049848
- WO-A2-2007/004199
- WO-A2-2007/031438
- US-A- 5 840 789
- US-B1- 6 534 455
- US-B1- 6 534 563
- "Entry 5370. Lapyrium Chloride" In: "The Merck Index, 14th edition", 1 January 2006 (2006-01-01), Merck & Co., Whitehouse Station, NJ, U.S.A., XP55058823, ISBN: 978-0-91-191000-1 pages 931-931, page 931, paragraph 5370

## Description

### Field of Invention

The present invention relates to the use of certain hydrophobically modified cationic polymers, prepared by polymerising an alkyl ester of acrylic acid or an alkyl ester of methacrylic acid, a nitrogen containing monomer; and an associative monomer; as deposition enhancers for pesticides and crop production chemicals, such as plant growth regulators, fertilizers and micronutrients, in aqueous solutions; an aqueous composition comprising these polymers and one or more pesticides and/or crop production chemicals, a process for preparing said aqueous composition, and the use of said composition for treatment of plants.

### Background of the Invention

In agricultural applications there is a problem for agrochemical spray droplets, mostly consisting of water, to deposit onto waxy plant leaf surfaces. One plausible reason for this is that the kinetic energy that the droplets have been given due to atomization when sprayed, is transformed into surface energy upon impact with the leaf surface. The droplet is stretching out on the surface, but this high surface tension is not favourable, which means that the droplet is pulled back. This pullback is so quick that part of, or the complete droplet, is detaching from the leaf surface. According to literature as much as 90% of the agricultural formulation could be lost by this phenomenon. There are two known ways to solve this problem, either by adding a surfactant that can quickly go to the surface and lower the surface tension, or by adding a polymer to control the cohesion of the droplet. However, using a surfactant gives rise to another problem, namely the problem of drift. The problems with pullback and drift will both reduce bio efficacy since the pesticide and/or crop production chemicals will not reach the plant. By using polymers the problem with drift can be avoided. However, problems are often encountered when formulating compositions comprising polymers, since it may give rise to high viscosity solutions and/or gelling.

There exist a number of different publications relating to polymers in pesticidal compositions for different purposes.

US 6,645,476 B1 generally discloses water-soluble polymers prepared by the copolymerization of a non-ionic macromer containing a hydrophilic moiety based on polyalkylene oxides, and a hydrophobic moiety which comprises hydrogen or a hydrocarbon radical; and one or more olefinically unsaturated co-monomers which contain oxygen, nitrogen, sulphur, phosphorous, chlorine and/or fluorine. The products are used as thickeners and dispersing agents for aqueous preparations, e.g. for crop protection agents.

US 2005/0053569 relates to the use of certain block co-polymers to assist in the deposition of emulsions on various surfaces, where said block co-polymers comprises at least one non-ionic hydrophobic block and at least one block containing cationic units. The block co-polymers may be used in the agrochemical sector, but no working examples relate to such use.

US 2007/0149409 concerns complexation between functionalized polymers and pesticides to achieve rainfastness and reduce leaching in soil. Formulations with pesticides and polymers are made by forming a slurry or solution of each of them in miscible solvents, mixing the slurries or solutions and then drying the mixture. Examples of cationic polymers are e.g. dimethylamine cellulose anion exchangers and of anionic polymers e.g. carboxymethyl-substituted or orthophosphate-substituted cellulose.

US 6,433,061 relates to a rheology modifying co-polymer composition containing a cross-linked co-polymer of at least one unsaturated carboxylic acid monomer, at least one hydrophobic monomer, a hydrophobic chain transfer agent, a cross linking agent and optionally a steric stabiliser, which composition provides increased viscosity in aqueous electrolyte-containing environments, e.g. in agricultural chemicals.

US 6,534,563 B1 relates to the use of compounds with particular elongational and flow viscosity as an anti-rebound agent included in aqueous plant protection formulations. The compounds used are selected from hydrosoluble or hydrodispersible surfactant polymers with a molecular weight in the range 5x104 to 5x106 g/mol, including a vide variety of compounds such as polysaccharides, polyoxyethylenated derivatives of glycols, copolymers obtained from alkylene oxide and at least one saturated or unsaturated monomer comprising one or more carboxyl groups in the form of the acid, alkali metal salt, ester or amide; plant polymers, copolymers obtained from at least one saturated or unsaturated monomer comprising one or more carboxyl groups in the form of the acid, alkali metal salt, ester or amide, or containing an amino or nitrile group, reacted with at least one second hydrocarbon-containing monomer carrying one or more ethylenically unsaturated bonds. Only anionic (MSA-diisobutylene copolymer sodium salt) and non-ionic polysaccharide-based polymers were used in the working examples.

WO 2007/031438 discloses that the inclusion of cationic polymers into pesticidal compositions significantly reduces the losses of a spray formulation by reducing droplet bounce and maximising deposition. The cationic polymers used are copolymers of N,N-dimethylamino ethyl acrylate with acrylamide whereby the amino functionality is quaternised with methyl chloride. The cationic polymer possesses a sufficiently high molecular weight in order to exert its effect on the viscosity of the solution and not simply act as a dispersant. Droplet bounce (measured at an angle of 45 degrees) is reduced by nearly 50%, when a cationic polymer is added to the agrochemical composition.

WO 2007/004199 relates to personal care compositions, *inter alia* comprising cationic polymers and certain active ingredients. However, the cationic polymers of such personal care compositions are present at relatively high concentrations, and the personal care compositions are not proposed for treatment of plants, especially not by spraying the compositions onto plants.

Hence, there is still a need in the art for agricultural compositions comprising cationic polymers, which have improved deposition properties, especially when sprayed onto the plant.

### Summary of the Invention

One object of the present invention is to provide alternative cationic polymers as deposition enhancers for pesticides and crop production chemicals. Another object of the invention is to provide a suitable process for preparing compositions comprising the cationic polymer, one or more pesticides, and/or crop production chemicals. Now it has surprisingly been found that certain hydrophobically modified cationic polymers, preferably prepared by emulsion polymerization, more preferably by single-stage emulsion polymerization, exhibit excellent properties as a deposition enhancer for pesticides and/or crop production chemicals, and that an agrochemical composition comprising the hydrophobically modified cationic polymer can conveniently be prepared by a specific mixing process.

### Brief description of the Drawing

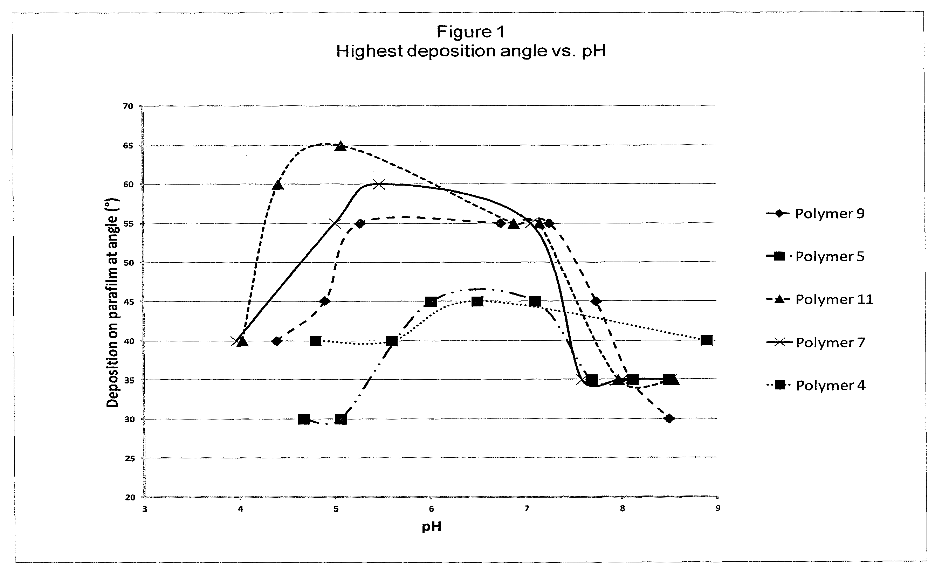

Figure 1 plots the results of Example 2.

### Detailed Description of the Invention

In a first aspect the invention relates to an aqueous composition comprising from 0.005 to 0.45 wt%, based on the total weight of the composition, of at least one hydrophobically modified cationic polymer and one or more pesticides and/or crop production chemicals.

In a second aspect, the invention relates to a process, typically a tank-mix process, for preparing the said aqueous composition containing the said polymer.

In a third aspect the invention relates to the use of the hydrophobically modified cationic polymer as a deposition enhancer for pesticides and/or crop production chemicals in aqueous compositions.

In a fourth aspect the invention relates to a method for the treatment of a plant by contacting said plant with the said aqueous composition, preferably by applying the composition to the plant surface by spraying.

The hydrophobically modified cationic polymer is obtainable by performing a polymerization reaction with at least the following monomers:
(i) 5 to 80 weight percent of an alkyl ester of acrylic acid or an alkyl ester of methacrylic acid, wherein the alkyl group has 1 to 4 carbon atoms, and mixtures thereof;
(ii) 5 to 80 weight percent of a monomer selected from the group consisting of a mono- or di-alkylamino alkyl(meth)acrylate, and a mono- or di-alkylamino alkyl(meth)acrylamide di-alkylamino alkyl(meth)acrylate, and a mono- or di-alkylamino alkyl(meth)acrylamide wherein the alkyl group has 1 to 4 carbon atoms, and mixtures thereof;
(iii) 0.1 to 30 weight percent of at least one associative monomer selected from the group consisting of:
   (b) an ethylenically unsaturated copolymerizable surfactant monomer, obtained by condensing a nonionic surfactant, such as an alkylene oxide adduct of an alcohol, having a hydrocarbyl group with from 5, preferably from 8, more preferably from 12, most preferably from 16, to 32, preferably to 24, more preferably to 22 carbon atoms, preferably 1-150, more preferably 1-30, ethyleneoxy units and preferably 0-50, more preferably 0-5, propyleneoxy units, with an ethylenically unsaturated carboxylic acid or the anhydride thereof;
   (f) a hydrocarbyl ester of acrylic acid or a hydrocarbyl ester of methacrylic acid, wherein the hydrocarbyl group has from 5, preferably from 8, more preferably from 12, most preferably from 16, to 32, preferably to 24, more preferably to 22 carbon atoms; and
(iv) 0 to 1 weight percent of at least one cross-linking monomer, preferably having at least two ethylenically unsaturated moieties, and where the cross-linking monomer preferably does not contain any sulphur atom;
wherein the weight percentages of the monomers (i) to (iv) are being based on the total weight of all monomers present in the polymerization reaction.

Preferably, the monomer (iii) is (b) and/or (f).

The hydrophobically modified cationic polymer that is used in accordance with the invention is the polymerization product of the above-identified monomers. One of the monomers used is an alkyl ester of acrylic acid or methacrylic acid (i), which is suitably prepared by reacting an acrylic acid or methacrylic acid and an alcohol having 1 to 4 carbon atoms. Suitable alcohols include methanol, ethanol, butanol, and propanol. A preferred alkyl ester of acrylic acid is ethyl acrylate. The amount of the alkyl ester of acrylic acid or methacrylic acid that is used to prepare the cationic polymer is from 5 to 80 weight percent, preferably from 15 to 70 weight percent, and more preferably from 40 to 70 weight percent, wherein the weight percentages are based on the total weight of the monomers used to prepare the hydrophobically modified cationic polymer.

The hydrophobically modified cationic polymer is also prepared with a monomer (ii) which is selected from the group consisting of a mono- or di-alkylamino alkyl(meth)acrylate, and a mono or di-alkylamino alkyl(meth)acrylamide, wherein the alkyl group has 1 to 4 carbon atoms, and mixtures thereof. Suitable monomers include N,N-dimethylamino ethyl methacrylate (DMAEMA), N,N-diethylamino ethyl acrylate, N,N-diethylamino ethyl methacrylate, N-t-butylamino ethyl acrylate, N-t-butylamino ethyl methacrylate, N,N-dimethylamino propyl acrylamide, N,N-dimethylamino propyl methacrylamide, N,N- diethylamino propyl acrylamide and N,N-diethylamino propyl methacrylamide. The amount of monomer (ii) that is used to prepare the cationic polymer is from 5 to 80 weight percent, preferably from 10 to 70 weight percent, and more preferably from 20 to 60 weight percent, wherein the weight percentages are based on the total weight of the monomers used to prepare the hydrophobically modified cationic polymer.

The hydrophobically modified cationic polymer also contains polymerized units from an associative monomer (iii). The associative monomer is selected from (a) urethane reaction products of a monoethylenically unsaturated isocyanate and non-ionic surfactants comprising C₁-C₂₄-, preferably C₁-C₄-alkoxy-terminated, block copolymers of 1,2-butylene oxide and 1,2-ethylene oxide, which are described in U.S. Patent No. 5,294,692; (b) an ethylenically unsaturated copolymerizable surfactant monomer obtained by condensing a nonionic surfactant having a C₅-C₃₂, preferably C₈-C₂₂, hydrocarbyl group, preferably 1-150, more preferably 1-30, ethyleneoxy units and preferably 0-50, more preferably 0-5, propyleneoxy units, with an ethylenically unsaturated carboxylic acid or the anhydride thereof, preferably a C₃-C₄ mono- or dicarboxylic acid or the anhydride thereof, more preferably a carboxylic acid or the anhydride thereof selected from acrylic acid, methacrylic acid, crotonic acid, maleic acid, maleic anhydride, itaconic acid and itaconic anhydride, as described in U.S. Patent No. 4,616,074; (c) a surfactant monomer selected from the group consisting of urea reaction product of a monoethylenically unsaturated monoisocyanate with a nonionic surfactant having amine functionality, as described in U.S. Patent No. 5,011,978; (d) an allyl ether of the formula CH₂=CR'CH₂OAₘBₙAₚR wherein R' is hydrogen or methyl, A is propyleneoxy or butyleneoxy, B is ethyleneoxy, n is zero or an integer, m and p are zero or an integer less than n, and R is a hydrophobic group of from 5, preferably from 8, to 32, preferably to 22 carbon atoms; (e) a nonionic urethane monomer which is the urethane reaction product of a monohydric nonionic surfactant with a monoethylenically unsaturated isocyanate, preferably a monomer lacking ester groups such as alpha, alpha-dimethyl-m-iso-propenyl benzyl isocyanate, as described in U.S. Patent Re. 33,156; and f) a hydrocarbyl ester of acrylic acid or a hydrocarbyl ester of methacrylic acid, wherein the hydrocarbyl group has from 5, preferably from 8, to 32, preferably to 24, more preferably to 22 carbon atoms.

Particularly preferred associative monomers are the ethylenically unsaturated copolymerizable surfactant monomers, obtained by condensing a nonionic surfactant with itaconic acid. The amount of the associative monomer (iii) that is used to prepare the cationic polymer is from 0.1 to 30 weight percent, preferably from 1 to 20 weight percent, and more preferably from 2 to 10 weight percent, wherein the weight percents are based on the total weight of monomer used to prepare the hydrophobically modified cationic polymer.

The cationic polymer is optionally prepared with a cross-linking monomer (iv) preferably having at least two ethylenically unsaturated moieties. Suitable cross-linking monomers include multi-vinyl-substituted aromatic monomers, multi-vinyl-substituted alicyclic monomers, di-functional esters of phthalic acid, di-functional esters of methacrylic acid, multi-functional esters of acrylic acid, N,N'-methylene-bisacrylamide and multi-vinyl-substituted aliphatic monomers such as dienes, trienes, and tetraenes. Preferred cross-linking monomers are divinylbenzene, trivinylbenzene, 1,2,4-trivinylcyclohexane, 1,5-hexadiene, 1,5,9-decatriene, 1,9-decadiene, 1,5-heptadiene, di-allyl phthalate, ethylene glycol dimethacrylate, polyethylene glycol dimethacrylate, penta- and tetraacrylates, triallyl pentaerythritol, octaallyl sucrose, cycloparaffins, and cycloolefins. A preferred cross-linking monomer is di-allyl phthalate. If applicable, the amount of the crosslinking monomer (iv) that is used to prepare the cationic polymer is from 0.01 to 1 weight percent, preferably from 0.01 to 0.5 weight percent, and more preferably from 0.1 to 0.3 weight percent, wherein the weight percentages of the individual monomers are based on the total weight of the monomers used to prepare the hydrophobically modified cationic polymer.

The weight average molecular weight of the polymers could be determined by e.g. gel permeation chromatography / size exclusion chromatography, and could vary within wide ranges, but is usually from 5.000, preferably from 10.000, more preferably from 30.000, to 10.000.000, preferably to 1.000.000, more preferably to 700.000, and most preferably to 100.000 Da.

The hydrophobically modified cationic polymer may be prepared by methods known in the art such as solution polymerization, emulsion polymerization, inverse emulsion polymerization, etc. In a preferred embodiment, the cationic polymers are prepared by forming an emulsion utilizing single-stage emulsion polymerization techniques. In this embodiment the monomers, water, free-radical initiator, optional surfactant in an amount effective to disperse the hydrophobically modified cationic polymer in the water upon polymerization of the monomers; and from about 0.5 to about 20 weight percent, based on total weight of the emulsion, of an alcohol selected from the group consisting of a C2-C12 linear or branched monohydric alcohol and a non-polymeric polyhydric alcohol, such as ethylene glycol, propylene glycol and glycerol; are combined in a polymerization reactor and maintained at a desired temperature and for a period of time which are effective to polymerize the monomers. If used the surfactant is suitably a nonionic surfactant. Preferably the polymerization reaction is initiated at about 30°C, with the contents of the polymerization vessel attaining a temperature of about 60°C. Typically the reaction time is from about 1 to about 6 hours. An advantage of using emulsion polymerization is that the viscosity remains close to that of water and is not dependent on molecular weight.

In the first aspect the invention relates to an aqueous composition comprising the hydrophobically modified cationic polymer described above and one or more pesticides and/or crop production chemicals.

An aqueous composition according to the invention that is suitable for plant treatment comprises at least 0.005, preferably 0.01, more preferably at least 0.02, still more preferably at least 0.03 and most preferably at least 0.04% (w/w) of the hydrophobically modified cationic polymer according to the invention, and at most 0.45, preferably at most 0.4, more preferably at most 0.3, and most preferably at most 0.2% (w/w) of the hydrophobically modified cationic polymer according to the invention; and at least 0.005, preferably at least 0.01, more preferably at least 0.02, still more preferably at least 0.03, and most preferably at least 0.04% (w/w) of the one or more pesticides and/or crop production chemicals, and at most 2, preferably at most 1, more preferably at most 0.5 and most preferably at most 0.4% (w/w) of the one or more pesticides and/or crop production chemicals.

An aqueous composition according to the invention that is suitable for plant treatment preferably comprises at least 90, preferably at least 95, more preferably at least 98 and at most 99.9 % (w/w) water.

As used herein, the term "pesticide" refers to an organic compound which will prevent, destroy, repel or mitigate any pest. Pesticides contemplated for use in the present invention include, but are not limited to, fungicides, herbicides, insecticides, miticides, nematicides, acaricides, and molluscicides, preferably fungicides, herbicides and/or insecticides. Preferred pesticides contemplated for use in the present invention belong to the classes triazoles, strobilurins, alkylenebis(dithiocarbamate) compounds, triazines, benzimidazoles, phenoxy carboxylic acids, benzoic acids, sulfonylureas, pyridine carboxylic acids, neonicotinides, amidines, organophosphates, and pyrethroids.

Examples of fungicides contemplated for use in the present invention include, but are not limited to, fungicides of the classes triazoles (e.g. tebuconazole, tetraconazole, cyproconazole, epoxiconazole, difenconazole, fenconazole, metconazole, propiconazole, prothioconazole), strobilurins (e.g. trifloxystrobin, azoxystrobin, fluoxastrobin, pyraclostrobin), alkylenebis(dithiocarbamate) compounds (e.g. mancozeb) and benzimidazoles (e.g carbendazim).

Examples of herbicides contemplated for use in the present invention include, but are not limited to, phenoxy carboxylic acids (e.g. 2,4-D-acid, MCPA), benzoic acids (e.g. Dicamba-acid), sulfonylureas (e.g. methylsulfuron-methyl, rimsulfuron, nicosulfuron), triazines (e.g. atrazine and simazine), triazolinones (e.g. amicarbazone) and pyridine carboxylic acids (e.g. triclopyr).

Examples of insecticides contemplated for use in the present invention include, but are not limited to, neonicotinides (e.g. thiamethoxam, clothianidin, imidachloprid, thiachloprid, acetamiprid), amidines (e.g. Amitraz), organophoshates (e.g. chlorpyrifos) and pyrethroids (e.g. permethrin, bifenthrin, deltamethrin).

As used herein the term "crop production chemicals" will refer to plant growth regulators, fertilizers and micronutrients. Plant growth regulators are chemicals that in small amounts promote and influence the growth, development and differentiation of cells and tissues in the plants. Fertilizers are substances that supply plant nutrients, and the main nutrients present in fertilizer are nitrogen, phosphorous, potassium, magnesium, sulphur and calcium (the macronutrients). Other nutrients that are trace elements with a role in plant nutrition (micronutrients) are added in smaller amounts. Micronutrients include iron, manganese, copper, zinc, boron and molybdenum, and they may be complexed to chelating agents, e.g. aminocarboxylates, such as EDTA, DTPA, HEDTA, EDDHMA and EDDHA.

The pH of the composition is preferably from 4, such as from 4.5, for example from 5, preferably to 8, such as to 7.5, for example to 7. A suitable range is 4.5 to 7.5. In the context of the present invention pH is given as the value obtained when measured for the composition at 20°C.

In addition to the hydrophobically modified cationic polymer of the invention, the one or more pesticides and the crop production chemicals, the compositions of the invention may contain additional components. Non-limiting examples of such additional components include for example oils, co-solvents and other adjuvants, such as surfactants, that are conventionally used to increase the bioefficacy of agricultural actives. An adjuvant is defined as an ingredient added to a mixture to aid or modify the action of an agrochemical, or to alter the physical characteristics of the mixture (ASTM Committee E35). This definition would thus also include e.g. wetting agents, defoamers, compatibility agents and sequestering agents.

In the second aspect the invention relates to a method to prepare the composition, as defined above, comprising the steps of mixing the hydrophobically modified cationic polymer, as defined above, with one or more pesticides and/or crop production chemicals. The method is typically carried out as a tank-mix process or as a process to prepare an in-can formulation. The polymer is preferably provided as a polymer emulsion, which is preferably prepared by utilizing single-stage emulsion polymerization techniques, and preferably said emulsion has a pH of at least 8. The method is suitably comprising the step of diluting the polymer emulsion with an aqueous medium to a polymer concentration of at least 0.005 and at most 0.45% (w/w).

The aqueous medium could be pure water, but normally it contains also other components. Examples of possible components that may be present in the aqueous medium are different inorganic salts or other substances that are present in natural waters, e.g. in water from wells, lakes, rivers and streams, as well as in municipal water. The one or more pesticides and/or crop production chemicals may be added with a part of, or all of, the aqueous medium and/or may be added separately to the polymer, usually after diluting the polymer emulsion. The one or more pesticides and/or crop production chemicals is usually added to the polymer as a solution, in water or in other solvent, or alternatively in neat form, as solids or liquids. When diluting, the polymer may be added to the water, or the water may be added to the polymer.

If the pH value of the composition obtained after dilution and addition of pesticides and/or crop production chemicals is outside the above-mentioned preferred pH range, the method preferably further comprises the step of adjusting the pH to a value within that range, by adding acid or base. Examples of situations where an adjustment of pH might not be necessary could be when pesticides having an acid function are added, or where the water used for dilution of the polymer has a low pH.

In the third aspect of the invention, the polymer as defined above is used as a deposition enhancer for pesticides and/or crop production chemicals in aqueous compositions, and in the fourth aspect of the invention the composition according to the invention, as described above, is used in a method for the treatment of a plant, by contacting said plant, and preferably the leaves of said plant, with the composition. The composition is preferably applied to the plant surface by spraying. Consequently, the pesticides and/or crop production chemicals intended for use in the present invention are especially those that are important to get onto the leaves of the plant. The amount of composition of the invention contacted the plant is preferably such that a agriculturally efficient amount of the pesticide/crop production chemical is contacted with the plant, i.e. an amount which is sufficient for the pesticide/crop production chemical to fulfil its purpose.

As is shown in the examples, the performance of the hydrophobically modified cationic polymer as a deposition enhancer in aqueous compositions is very good in the above-mentioned preferred pH range.

Where numerical ranges are disclosed, they are meant to be continuous ranges that include every value between the minimum and maximum value as presented. Wt% and %w/w mean percent by weight.

The invention will now be further described in connection with the following Examples.

Unless otherwise stated, all parts and percentages refer to parts and percentages by weight. All numbers given relate to the amount of active material.

### General Experimental

The following products in the Table below have been used in the examples. For the experimental products 5-12 the monomer composition is displayed in the Table 1 below.

**Table 1: Composition of polymers**

| | | | **Monomer composition %(w/w)** | | | | | |
|---|---|---|---|---|---|---|---|---|
| **Product** | **Ethyl acrylate** | **Butyl acrylate** | **DMAEMA** | **Cetyl (20 EO) itaconate half acid ester** | **Stearyl (20 EO) itaconate half acid ester** | **Behenyl (20EO) itaconate half acid ester** | **Stearyl meth acrylate** | **Comment** |
| No Polymer | | | | | | | | |
| Polymer 1 (Comparison) | | | | | | | | Sodium salt of acrylic acid homopolymer - Alcogum 1370 |
| Polymer 2 (Comparison) | | | | | | | | Acrylate based Alkali Soluble Emulsion polymer (ASE) - Alcogum L12 |
| Polymer 3 (Comparison) | | | | | | | | Acrylate based Hydrophobically modified Alkali Soluble Emulsion polymer (HASE) - Alcogum SL78 |
| Polymer 4 (Comparison) | 47.5 | 47.5 | - | 5 | | | | No amine-containing monomer |
| Polymer 5 (Comparison) | 62 | | 38 | | | | | No associative monomer |
| Polymer 6 | 57.5 | | 35 | 7.5 | | | | 50 % more associative monomer |
| Polymer 7 | 59 | | 36 | | | | 5 | Methacrylic acid hydrophobic ester |
| Polymer 8 | 59 | | 36 | | | 5 | | No polymerization surfactant used for synthesis |
| Polymer 9 | 59 | | 36 | 5 | | | | |
| Polymer 10 | 59 | | 36 | | 5 | | | |
| Polymer 11 | 59 | | 36 | | | 5 | | |

### Example 1

Polymers, in form of polymer emulsions, were diluted with deionized water to a polymer concentration of ~0.4% (w/w). The pH of the emulsions was then adjusted using acetic acid to a pH of 5.2 (20°C). This adjustment of pH made the emulsions clear. The solutions were finally diluted with deionized water to their use concentration (0.2; 0.1; 0.04; 0.02%(w/w)) (pH -5.2) before measured by the drop test as described below.

A syringe was placed 0.5 m above a flat surface, and droplets were allowed to fall from the syringe onto the surface. The droplets had a mean volume of 11.6 mm³ as determined by weighing 100 droplets and approximating with the density of water. The flat surface, which the droplets are landing on, was covered with a layer of Parafilm M® (ex Pechiney Plastic Packaging, Inc) to mimic the hydrophobic leaf surface. The slope of this surface may be varied. The steeper the slope the tougher it gets for the droplets to adhere to the surface. The slopes are reported in degrees, where 0 degrees means a horizontal surface and 90 degrees means a vertical surface.

For each value of the slope a total of five droplets were allowed to collide to the surface. If 3 of the droplets adhere immediately (i.e. without sliding or scattering) the liquid is considered to adhere at that slope. The slope was increased by increments of five degrees until 3 out of five droplets did not adhere to the surface.

In table 2, the highest angle where the droplets adhered to the surface is given for the polymers 1-11 at different concentrations of the polymers.

From these experiments it is evident that the hydrophobically modified cationic polymer according to the invention is a much better deposition enhancer than both the non-hydrophobically and hydrophobically modified anionic polymers that were used as comparison. Actually, the deposition of the compositions comprising anionic polymers was not much better than the deposition of a composition where no polymer was present at all.

**Table 2 - Highest deposition angle**

| **Polymer** | **Concentration** | | | |
|---|---|---|---|---|
| | 0.2% (w/w) | 0.1% (w/w) | 0.04% (w/w) | 0.02% (w/w) |
| | **Angle °** | | | |
| No polymer | 15 | 15 | 15 | 15 |
| Polymer 1 (Comparison) | 30 | 20 | 20 | 20 |
| Polymer 2 (Comparison) | 30 | 25 | 25 | 20 |
| Polymer 3 (Comparison) | 25 | 15 | 15 | 15 |
| Polymer 4 (Comparison) | 40 | 25 | 20 | 15 |
| Polymer 5 (Comparison) | 30 | 30 | 25 | 15 |
| Polymer 6 | **50** | **45** | **35** | **25** |
| Polymer 7 | **60** | **55** | **35** | **25** |
| Polymer 8 | **70** | **65** | **50** | **35** |
| Polymer 9 | **60** | **45** | **30** | **30** |
| Polymer 10 | **65** | **50** | **30** | **25** |
| Polymer 11 | **70** | **65** | **50** | **30** |

### Example 2

In this example the highest deposition angle where the droplets adhered to the surface was determined by the method described above for some of the polymers and at different pH-values.

The respective polymers, in form of polymer emulsions, were diluted with deionized water to a polymer concentration of 0.1% (w/w). The pH of the emulsions was then adjusted using acetic acid to the pH mentioned in Table 3.

**Table 3 - Highest deposition angle vs. pH**

| Polymer 4 (Comparison) | | Polymer 5 (Comparison) | | Polymer 7 | | Polymer 9 | | Polymer 11 | |
|---|---|---|---|---|---|---|---|---|---|
| pH | Angle | pH | Angle | pH | Angle | pH | Angle | pH | Angle |
| 4.8 | 40 | 4.67 | 30 | 3.97 | 40 | 4.39 | 40 | 4.03 | 40 |
| 5.6 | 40 | 5.06 | 30 | 5.01 | 55 | 4.9 | 45 | 4.41 | 60 |
| 6.5 | 45 | 6.01 | 45 | 5.47 | 60 | 5.27 | 55 | 5.07 | 65 |
| 8.9 | 40 | 7.1 | 45 | 7.06 | 55 | 6.74 | 55 | 6.88 | 55 |
| - | - | 7.69 | 35 | 7.59 | 35 | 7.25 | 55 | 7.15 | 55 |
| - | - | 8.12 | 35 | 8.01 | 35 | 7.74 | 45 | 7.97 | 35 |
| | | 8.5 | 35 | 8.52 | 35 | 8.1 | 35 | 8.55 | 35 |
| | | - | - | - | - | 8.5 | 30 | - | - |

From the table above it is shown that the polymers according to the invention have higher maximal deposition angles than the comparison products within the optimal pH range between about 4.5 and 7.5.

### Example 3

An investigation of the deposition of droplets for a composition according to the present invention was performed according to the method described under General Experimental. Comparisons were made with pure water, 2,4D in water and Polymer 7 in water. In the Table below the maximal deposition angles where the droplets adhered to the surface is given for each of the samples.

The composition was prepared as follows:

An emulsion containing 20% by weight of Polymer 7 was diluted with water to obtain a concentration of 0.2% by weight of polymer. A solution containing 20 g/l of 2,4D (2,4-dichlorophenoxyacetic acid) in water having a pH of ca 5, was prepared by dissolving the appropriate amount of 2,4D and adjusting the pH with ammonia. Then equal amounts of these two solutions were mixed, and the pH for the mixture was adjusted to 5.5 by addition of acetic acid.

The resulting solution (Composition 1) thus contained 0.1% by weight of Polymer 7 and 10 g/l of 2,4D.

| Sample | Angle (°) |
|---|---|
| Pure H₂O | 20 |
| 2,4D (10 g/l in water) | 30 |
| Polymer 7 (0.1% in water) | 65 |
| Composition 1 (see above) | 70 |

All samples had a pH of 5.5.

## Claims

1. An aqueous composition comprising from 0.005 to 0.45 wt%, based on the total weight of the composition, of at least one hydrophobically modified cationic polymer obtainable by performing a polymerization of the monomers:
(i) 5 to 80 weight percent of an alkyl ester of acrylic acid or an alkyl ester of methacrylic acid, wherein the alkyl group has 1 to 4 carbon atoms; and
(ii) 5 to 80 weight percent of a monomer selected from the group consisting of a mono- or di-alkylamino alkyl(meth)acrylate, and a mono or di-alkylamino alkyl(meth)acrylamide, wherein the alkyl group has 1 to 4 carbon atoms, and mixtures thereof; and
(iii) 0.1 to 30 weight percent of an associative monomer selected from the group consisting of:
(b) an ethylenically unsaturated copolymerizable surfactant monomer, obtained by condensing a nonionic surfactant, having a C₅-C₃₂ hydrocarbyl group, with an ethylenically unsaturated carboxylic acid or the anhydride thereof; and
(f) a hydrocarbyl ester of acrylic acid or a hydrocarbyl ester of methacrylic acid, wherein the hydrocarbyl group has from 5 to 32 carbon atoms; and
(iv) 0 to 1 weight percent of a cross-linking monomer;
wherein the weight percentages of the monomers are being based on the total weight of all monomers present in the polymerization reaction; and
one or more pesticides and/or crop production chemicals being plant growth regulators, fertilizers, and micronutrients.

2. A composition according to claim 1, wherein said associative monomer (iii) is (b).

3. A composition according to claim 1 or 2 comprising at least 0.005 and at most 2% (w/w) of the one or more pesticides and/or crop production chemicals.

4. A composition according to any one of the preceding claims, having a pH of from 4 to 8.

5. A composition according to any one of the preceding claims where the polymer is obtained by performing emulsion polymerization of the monomers.

6. A composition according to any one of the preceding claims where (iii) is an ethylenically unsaturated copolymerisable surfactant monomer obtained by condensing a non-ionic surfactant with itaconic acid.

7. A composition according to any one of the preceding claims where (ii) is a mono- or dialkylamino alkyl(meth)acrylate wherein the alkyl group has 1 to 4 carbon atoms.

8. A composition according to claim 7 wherein the mono- or dialkylamino alkyl(meth)acrylate is N,N-dimethylamino ethyl methacrylate.

9. A composition according to any one of the preceding claims where (i) is ethyl acrylate.

10. A composition according to any one of the preceding claims, comprising from 90 to 99.9 %, preferably from 95 to 99.9 % (w/w) water.

11. A method to prepare a composition as defined in any one of claims 1-10 comprising the steps of mixing a polymer as defined in anyone of the claims 1-10 with one or more pesticides and/or crop production chemicals being plant growth regulators, fertilizers, and micronutrients.

12. A method according to claim 11 where the polymer is provided as a polymer emulsion.

13. A method according to claim 11 or 12 comprising the step of diluting the polymer emulsion with an aqueous medium to a polymer concentration of at least 0.005 and at most 0.45% (w/w).

14. A method according to claim 13 where all of, or part of, the aqueous medium comprises one or more pesticides and/or crop production chemicals being plant growth regulators, fertilizers, and micronutrients.

15. A method according to claim 13 or 14 comprising the step of adding one or more pesticides and/or crop production chemicals to the diluted polymer composition.

16. The use of a polymer as defined in any one of the claims 1 to 10 as a deposition enhancer for pesticides and/or crop production chemicals being plant growth regulators, fertilizers, and micronutrients in aqueous compositions.

17. A method for treatment of a plant by contacting said plant with a composition as defined in anyone of the claims 1 to 10.

18. A method according to claim 17, wherein the step of contacting is obtained by spraying.

## Patentansprüche

1. Wässrige Zusammensetzung umfassend von 0,005 bis 0,45 Gew.%, basierend auf dem Gesamtgewicht der Zusammensetzung, von mindestens einem hydrophob modifizierten kationischen Polymer, erhältlich durch Durchführung einer Polymerisation der Monomere:
i. 5 bis 80 Gew.% eines Alkylesters von Acrylsäure oder eines Alkylesters von Methacrylsäure, wobei die Alkylgruppe 1 bis 4 Kohlenstoffatome hat; und
ii. 5 bis 80 Gew.% eines Monomers, ausgewählt aus der Gruppe bestehend aus einem Mono- oder Di-Alkylaminoalkyl(meth)acrylat und einem Mono- oder Di-Alkylaminoalkyl(meth)acrylamid, wobei die Alkylgruppe 1 bis 4 Kohlenstoffatome hat, und ihren Mischungen; und
iii. 0,1 bis 30 Gew.% eines assoziativen Monomers, ausgewählt aus der Gruppe bestehend aus:
(b) einem ethylenisch ungesättigten copolymerisierbaren Tensidmonomer, gewonnen durch Kondensieren eines nichtionischen Tensids, das eine C₅-C₃₂ Hydrocarbylgruppe hat, mit einer ethylenisch ungesättigten Carbonsäure oder ihrem Anhydrid; und
(f) einem Hydrocarbylester von Acrylsäure oder einem Hydrocarbylester von Methacrylsäure, wobei die Hydrocarbylgruppe von 5 bis 32 Kohlenstoffatome hat; und
iv. 0 bis 1 Gew.% eines vernetzenden Monomers;
wobei die Gewichtsprozentsätze der Monomere auf dem Gesamtgewicht aller in der Polymerisationsreaktion vorhandenen Monomere basieren;
und
ein oder mehrere Pestizide und/oder Agrarchemikalien, bei denen es sich um Pflanzenwachstumsregler, Düngemittel und Mikronährstoffe handelt.

2. Zusammensetzung nach Anspruch 1, wobei das assoziative Monomer (iii) gleich (b) ist.

3. Zusammensetzung nach Anspruch 1 oder 2, umfassend mindestens 0,005 und höchstens 2 Gew.% des einen oder mehrerer Pestizide und/ oder Agrarchemikalien.

4. Zusammensetzung nach einem der vorhergehenden Ansprüche, die einen pH-Wert von 4 bis 8 hat.

5. Zusammensetzung nach einem der vorhergehenden Ansprüche, wobei das Polymer durch Durchführung einer Emulsionspolymerisation der Monomere erhalten wurde.

6. Zusammensetzung nach einem der vorhergehenden Ansprüche, wobei (iii) ein ethylenisch ungesättigtes copolymerisierbares Tensidmonomer ist, das durch Kondensieren eines nicht ionischen Tensids mit Itaconsäure erhalten wurde.

7. Zusammensetzung nach einem der vorhergehenden Ansprüche, wobei (ii) ein Mono- oder Dialkylaminoalkyl(meth)acrylat ist, wobei die Alkylgruppe 1 bis 4 Kohlenstoffatome hat.

8. Zusammensetzung nach Anspruch 7, wobei das Mono- oder Dialkylaminoalkyl(meth)acrylat gleich N,N-Dimethylaminoethylmethacrylat ist.

9. Zusammensetzung nach einem der vorhergehenden Ansprüche, wobei (i) Ethylacrylat ist.

10. Zusammensetzung nach einem der vorhergehenden Ansprüche, umfassend von 90 bis 99,9 Gew.%, vorzugsweise von 95 bis 99,9 Gew.%, Wasser.

11. Verfahren zur Herstellung einer Zusammensetzung, wie in einem der Ansprüche 1-10 definiert, umfassend die Schritte des Mischens eines Polymers, wie in einem der Ansprüche 1-10 definiert, mit einem oder mehreren Pestiziden und/oder Agrarchemikalien, bei denen es sich um Pflanzenwachstumsregler, Düngemittel und Mikronährstoffe handelt.

12. Verfahren nach Anspruch 11, wobei das Polymer als Polymeremulsion bereitgestellt ist.

13. Verfahren nach Anspruch 11 oder 12, umfassend den Schritt des Verdünnens der Polymeremulsion mit einem wässrigen Medium auf eine Polymerkonzentration von mindestens 0,005 und höchstens 0,45 Gew.%.

14. Verfahren nach Anspruch 13, wobei das gesamte oder ein Teil des wässrigen Mediums ein oder mehrere Pestizide und/oder Agrarchemikalien umfasst, bei denen es sich um Pflanzenwachstumsregler, Düngemittel und Mikronährstoffe handelt.

15. Verfahren nach einem der Ansprüche 13 oder 14, umfassend den Schritt des Hinzufügens eines oder mehrerer Pestizide und/oder Agrarchemikalien zu der verdünnten Polymerzusammensetzung.

16. Verwendung eines Polymers, wie nach einem der Ansprüche 1 bis 10 definiert, als Ablagerungsverstärker für Pestizide und/oder Agrarchemikalien, bei denen es sich um Pflanzenwachstumsregler, Düngemittel und Mikronährstoffe in wässrigen Zusammensetzungen handelt.

17. Verfahren zur Behandlung einer Pflanze durch Inkontaktbringen der Pflanze mit einer Zusammensetzung, wie in einem der Ansprüche 1 bis 10 definiert.

18. Verfahren nach Anspruch 17, wobei der Schritt des Inkontaktbringens durch Sprühen erreicht wird.

## Revendications

1. Composition aqueuse comprenant 0,005 à 0,45% en poids, par rapport au poids total de la composition, d'au moins un polymère cationique à modification hydrophobe pouvant être obtenu en effectuant une polymérisation des monomères :
(i) 5 à 80% en poids d'un ester d'alkyle d'acide acrylique ou d'un ester d'alkyle d'acide méthacrylique, où le groupe alkyle a de 1 à 4 atome(s) de carbone ; et
(ii) 5 à 80% en poids d'un monomère choisi dans le groupe constitué d'un mono- ou di-alkylamino alkyl(méth)acrylate et d'un mono- ou di-alkylamino alkyl(méth)acrylamide, où le groupe alkyle a de 1 à 4 atome(s) de carbone, et leurs mélanges ; et
(iii) 0,1 à 30% en poids d'un monomère associatif choisi dans le groupe constitué :
(b) d'un monomère tensioactif copolymérisable à insaturation éthylénique obtenu en condensant un tensioactif non ionique, ayant un groupe hydrocarbyle en C₅ à C₃₂, avec un acide carboxylique à insaturation éthylénique ou l'anhydride de celui-ci ; et
(f) d'un ester d'hydrocarbyle d'acide acrylique ou d'un ester d'hydrocarbyle d'acide méthacrylique, où le groupe hydrocarbyle a de 5 à 32 atomes de carbone ; et
(iv) 0 à 1% en poids d'un monomère de réticulation ;
dans laquelle les pourcentages en poids des monomères sont basés sur le poids total de tous les monomères présents dans la réaction de polymérisation ; et
un ou plusieurs pesticide(s) et/ou produit(s) chimique(s) pour les cultures qui sont des régulateurs de croissance végétale, des engrais et des micronutriments.

2. Composition selon la revendication 1, dans laquelle ledit monomère associatif (iii) est (b).

3. Composition selon la revendication 1 ou 2, comprenant au moins 0,005 et au plus 2% (p/p) du ou des pesticide(s) et/ou produit(s) chimique(s) pour les cultures.

4. Composition selon l'une quelconque des revendications précédentes, ayant un pH allant de 4 à 8.

5. Composition selon l'une quelconque des revendications précédentes, dans laquelle le polymère est obtenu en effectuant une polymérisation en émulsion des monomères.

6. Composition selon l'une quelconque des revendications précédentes, dans laquelle (iii) est un monomère tensioactif copolymérisable à insaturation éthylénique obtenu en condensant un tensioactif non ionique avec l'acide itaconique.

7. Composition selon l'une quelconque des revendications précédentes, dans laquelle (ii) est un mono- ou di-alkylamino alkyl(méth)acrylate où le groupe alkyle a de 1 à 4 atome(s) de carbone.

8. Composition selon la revendication 7, dans laquelle le mono- ou dialkylamino alkyl(méth)acrylate est le N,N-diméthylaminoéthylméthacrylate.

9. Composition selon l'une quelconque des revendications précédentes, dans laquelle (i) est l'acrylate d'éthyle.

10. Composition selon l'une quelconque des revendications précédentes, comprenant 90 à 99,9%, de préférence 95 à 99,9% (p/p) d'eau.

11. Procédé pour préparer une composition telle que définie dans l'une quelconque des revendications 1 à 10, comprenant les étapes qui consistent à mélanger un polymère tel que défini dans l'une quelconque des revendications 1 à 10 avec un ou plusieurs pesticide(s) et/ou produit(s) chimique(s) pour les cultures qui est/sont des régulateurs de croissance végétale, des engrais et des micronutriments.

12. Procédé selon la revendication 11, dans lequel le polymère est fourni sous forme d'émulsion polymère.

13. Procédé selon la revendication 11 ou 12, comprenant l'étape qui consiste à diluer l'émulsion polymère avec un milieu aqueux à une concentration de polymère d'au moins 0,005 et d'au plus 0,45% (p/p).

14. Procédé selon la revendication 13, dans lequel tout le milieu aqueux, ou une partie de celui-ci, comprend un ou plusieurs pesticide(s) et/ou produit(s) chimique(s) pour les cultures qui est/sont des régulateurs de croissance végétale, des engrais et des micronutriments.

15. Procédé selon la revendication 13 ou 14, comprenant l'étape qui consiste à ajouter un ou plusieurs pesticide(s) et/ou produit(s) chimique(s) pour les cultures à la composition polymère diluée.

16. Utilisation d'un polymère tel que défini dans l'une quelconque des revendications 1 à 10 en tant que promoteur de dépôt pour des pesticides et/ou produits chimiques pour les cultures qui sont des régulateurs de croissance végétale, des engrais et des micronutriments dans des compositions aqueuses.

17. Procédé de traitement d'une plante par mise en contact de ladite plante avec une composition telle que définie dans l'une quelconque des revendications 1 à 10.

18. Procédé selon la revendication 17, dans lequel l'étape de mise en contact est obtenue par pulvérisation.
